# DEMANDE DE BREVET EUROPEEN

(11) **EP 1 592 271 A1**
(43) Date de publication de la demande: **02.11.2005**
(21) Numéro de dépôt: 05008579.4
(22) Date de dépôt: 20.04.2005
(51) Int. Cl.: H04Q 7/32

(54) **Procédé et appareil de contrôle de puissance d'émission sur des canaux de communication**

(30) Priorité: 26.04.2004 FR 0404393
(71) Demandeur: Nortel Networks Limited, St.Laurent, Quebec H4S 2A9 (CA)
(72) Inventeur: Gervais, Aurélie, 92150 Suresnes (FR); Massie, Bastien, 78720 La Celle lès Bordes (FR); Taffin, Arnauld, 91440 Bures sur Yvette (FR)
(74) Mandataire: Ameline, Jean-Paul B.C.

(57) **Abrégé**

Une station de base (1) transmet, dans des intervalles de temps de transmission successifs, des blocs à destination de terminaux radio (2, 3), sur des canaux de communication partagés entre les terminaux radio comprenant des canaux de trafic et des canaux de contrôle associés à des canaux de trafic, certains des blocs transmis donnant lieu à des acquittements positifs ou négatifs de la part des terminaux radio. Relativement à un terminal radio (2) :
- on détermine une indication de qualité relative audit canal de trafic ;
- on détermine une quantité relative à des acquittements préalablement transmis à la station de base ; et
- on calcule une puissance d'émission sur le canal de trafic et/ou le canal de contrôle associé, pour le prochain intervalle de temps de transmission correspondant, à partir de ladite indication de qualité et ladite quantité relative à des acquittements.

## Description

La présente invention concerne le contrôle de puissance d'émission sur des canaux de communication dans un système de radiocommunication. Elle concerne plus particulièrement le contrôle de puissance pour certains canaux de communication utiles à la mise en oeuvre de transmissions de données à haut débit.

Des procédures de contrôle de puissance sont connues pour des systèmes de radiocommunication, comme le système GSM ("Global System for Mobile communications") ou le système UMTS ("Universal Mobile Telecommunication System"). Elles ont pour but d'améliorer les performances de réception des informations transmises tout en limitant les risques d'interférences.

Le contrôle de puissance est particulièrement sensible lorsqu'il est appliqué à des canaux de transmission de données autorisant un débit élevé, car une puissance trop faible sur de tels canaux peut engendrer un fort taux d'erreur dans la transmission, préjudiciable au débit offert. C'est également le cas pour les canaux de contrôle associés à un canal de transmission de données à haut de débit, car une puissance trop faible sur de tels canaux peut provoquer une mauvaise écoute du canal de transmission de données associé et donc la perte d'informations utiles.

L'UMTS propose une fonctionnalité de transmission de données à haut débit, appelée HSDPA ("High Speed Downlink Packet Access"). Une description d'ensemble de cette fonctionnalité peut être trouvée dans la spécification technique 3GPP TS 25.308, Release 5, version 5.4.0, publiée en décembre 2003 par le 3GPP ("3^{rd} Generation Partnership Project").

Le HSDPA prévoit l'utilisation de canaux de transport descendants partagés, appelés HS-DSCH ("High Speed -Downlink Shared CHannel"), multiplexés sur des canaux physiques HS-PDSCH ("High Speed - Physical Downlink Shared CHannel"), permettant à une station de base de transmettre à des terminaux des données à haut débit. Les terminaux renvoient à la station de base des informations de contre-réaction, notamment des acquittements et des indications liées à la qualité des transmissions descendantes, sur des canaux dédiés montants, appelés HS-DPCCH ("High Speed - Dedicated Physical Control CHannel").

Pour un canal HS-DSCH, il doit être prévu un ou plusieurs canaux physiques de contrôle partagés spécifiques appelés HS-SCCH (« High Speed - Shared Control CHannel »). Les informations de signalisation portées par les HS-SCCH identifient les terminaux destinataires des blocs transmis sur les HS-DSCH, et leur fournissent un certain nombre d'indications utiles à la réception de ces blocs.

Une station de base mettant en oeuvre une transmission de données à haut débit selon la fonctionnalité HSDPA répartit une puissance entre les canaux HS-PDSCH et HS-SCCH. La puissance à répartir entre les canaux descendants HSDPA est typiquement la puissance restante lorsque tous les canaux descendants dédiés et communs se sont vus affecter une puissance d'émission.

La spécification technique TS 25.214, version 5.7.0, Release 5, "Universal Mobile Telecommunications System (UMTS) ; Physical layer procedures (FDD)", publiée en décembre 2003 par le 3GPP, précise que la puissance d'émission sur le HS-SCCH peut être fixée par application d'une marge par rapport à la puissance d'émission sur un canal dédié DPCCH ("Dedicated Physical Control CHannel"). Toutefois, cette marge est définie de façon optionnelle, si bien que le canal HS-SCCH doit pouvoir être contrôlé en puissance d'une autre manière également.

En ce qui concerne les canaux HS-PDSCH, rien n'est spécifié pour régler leur puissance d'émission.

Un but de la présente invention est d'éviter de la perte d'informations et une limitation des performances relativement à certains canaux de communication, tels que les canaux HS-PDSCH et HS-SCCH.

Un autre but de l'invention est de contrôler la puissance d'émission sur certains canaux de communication partagés, tels que les canaux HS-PDSCH et HS-SCCH de manière efficace et adaptée.

L'invention propose ainsi un procédé de contrôle de puissance d'émission sur des canaux de communication dans un système de radiocommunication comprenant au moins une station de base agencée pour transmettre, dans des intervalles de temps de transmission successifs, des blocs à destination de terminaux radio, sur des canaux de communication partagés entre les terminaux radio, les canaux de communication partagés comprenant des canaux de trafic et des canaux de contrôle associés à des canaux de trafic, certains au moins des blocs transmis par la station de base donnant lieu à des acquittements positifs ou négatifs de la part des terminaux radio. Le procédé comprend les étapes suivantes relativement à un terminal radio susceptible de recevoir des blocs sur au moins un canal de trafic et un canal de contrôle associé audit canal de trafic, lors d'un prochain intervalle de temps de transmission correspondant pour chaque canal :
- déterminer au moins une indication de qualité relative audit canal de trafic ;
- déterminer au moins une quantité relative à des acquittements préalablement transmis à la station de base ; et
- calculer une puissance d'émission sur l'un au moins parmi le canal de trafic et le canal de contrôle associé audit canal de trafic, pour ledit prochain intervalle de temps de transmission correspondant, à partir de ladite indication de qualité relative au canal de trafic et de ladite quantité relative à des acquittements préalablement transmis à la station de base.

Un tel contrôle de puissance peut être appliqué par exemple à des canaux de trafic du type HS-DSCH et/ou à des canaux de contrôle HS-SCCH associés à un ou des canaux HS-DSCH.

Il évite notamment d'avoir à régler la puissance d'émission en fonction de la puissance sur un autre canal dédié DPCCH.

Par ailleurs, même lorsque l'indication de qualité relative audit canal de trafic résulte de la remontée d'informations de la part du terminal radio considéré, on s'assure que la puissance d'émission finalement calculée est relativement fiable puisqu'elle prend en compte également des informations relatives à un mécanisme d'acquittement. Ainsi, même si les informations remontées à la station de base diffèrent en valeur entre des terminaux radio distincts, la puissance calculée assure un certain niveau de qualité de service pour chacun de ces terminaux, sur la base des acquittements retournés.

On note que la détermination de l'indication de qualité relative audit canal de trafic et celle de la quantité relative à des acquittements préalablement transmis à la station de base peuvent être effectuées dans n'importe quel ordre. La détermination de l'indication de qualité relative audit canal de trafic peut même prendre en compte la quantité déterminée, relative à des acquittements préalablement transmis à la station de base.

La puissance calculée pour chaque canal considéré sur un intervalle de temps de transmission correspondant est choisie de sorte que la somme des puissances d'émission pour des canaux partagés sur cet intervalle de temps de transmission soit inférieure à une puissance prédéterminée, par exemple une puissance restante au niveau de la station de base après affectation de puissance aux canaux de communication déjà alloués.

On peut par exemple calculer d'abord une puissance d'émission pour un canal de contrôle sur un intervalle de temps de transmission correspondant, puis pour un canal de trafic associé sur un intervalle de temps de transmission correspondant, en tenant compte de la puissance déjà affectée au canal de contrôle. Lorsque les deux intervalles de temps de transmission considérés ne se confondent pas, la puissance d'émission calculée pour le canal de contrôle par exemple prend avantageusement en compte la puissance déjà affectée pour le ou les canaux de trafic sur l'intervalle de temps de transmission précédent correspondant.

La puissance d'émission pour un canal de contrôle est par exemple calculée par application d'une marge par rapport à une puissance d'un canal pilote de puissance prédéterminée. La puissance d'émission pour un canal de trafic est par exemple calculée par application d'une marge par rapport à une puissance de référence.

Le nombre de canaux physiques sur lequel le canal de trafic est à multiplexer sur un prochain intervalle de temps de transmission peut également être déduit de ladite indication de qualité relative audit canal de trafic. La puissance d'émission calculée pour le canal de trafic est alors avantageusement répartie uniformément entre les différents canaux physiques sur ledit prochain intervalle de temps de transmission.

L'invention propose en outre une station de base agencée pour transmettre, dans des intervalles de temps de transmission successifs, des blocs à destination de terminaux radio, sur des canaux de communication partagés entre les terminaux radio, les canaux de communication partagés comprenant des canaux de trafic et des canaux de contrôle associés à des canaux de trafic, certains au moins des blocs transmis par la station de base donnant lieu à des acquittements positifs ou négatifs de la part des terminaux radio. La station de base est agencée pour mettre en oeuvre un contrôle de puissance d'émission sur certains au moins desdits canaux de communication partagés selon le procédé susmentionné.

L'invention propose également un produit programme d'ordinateur à installer dans une station de base, comprenant des instructions pour mettre en oeuvre le procédé susmentionné, lors d'une exécution du programme par des moyens de la station de base.

D'autres particularités et avantages de la présente invention apparaîtront dans la description ci-après d'exemples de réalisation non limitatifs, en référence aux dessins annexés, dans lesquels :
- la figure 1 est une représentation temporelle illustrant les principaux canaux radio utilisés dans le cadre de la fonctionnalité HSDPA ;
- la figure 2 est un schéma montrant une station de base apte à communiquer avec des terminaux radio selon la fonctionnalité HSDPA ;
- la figure 3 est un organigramme montrant un mode de contrôle de la puissance sur un canal HS-SCCH selon l'invention ;
- la figure 4 est un organigramme montrant un mode de contrôle de la puissance sur un canal HS-DSCH selon l'invention ;
- la figure 5 est un organigramme montrant un mode de contrôle de la puissance sur chaque canal physique HS-PDSCH selon l'invention.

Dans la présente description, l'invention sera décrite plus particulièrement dans son application, non limitative, aux réseaux de radiocommunication de troisième génération de type UMTS en mode FDD (« Frequency Division Duplex »).

L'UMTS est un système de radiocommunication utilisant un accès multiple à répartition par codes (CDMA, « Code-Division Multiple Access »), c'est-à-dire que les symboles transmis sont multipliés par des codes d'étalement constitués d'échantillons appelés « chips » dont la cadence (3,84 Mchip/s dans le cas de l'UMTS) est supérieure à celle des symboles transmis. Les codes d'étalement distinguent différents canaux physiques PhCH (« Physical CHannel ») qui sont superposés sur la même ressource de transmission constituée par une fréquence porteuse. Les propriétés d'auto- et d'intercorrélation des codes d'étalement permettent au récepteur de séparer les PhCH et d'extraire les symboles qui lui sont destinés. Pour l'UMTS en mode FDD sur la liaison descendante, un code de brouillage est alloué à chaque cellule, et différents canaux physiques utilisés par cette cellule sont distingués par des codes de « channelisation » mutuellement orthogonaux. Pour chaque PhCH, le code d'étalement global est le produit du code de « channelisation » et du code de brouillage de la cellule. Le facteur d'étalement (égal au rapport entre la cadence des chips et la cadence des symboles) est une puissance de 2 comprise entre 4 et 512. Ce facteur est choisi en fonction du débit de symboles à transmettre sur le PhCH.

On se place désormais dans le cas d'une utilisation de la fonctionnalité HSDPA évoquée plus haut. Le HSDPA permet la transmission par une station de base de données à débit élevé pour un ensemble de terminaux situés dans la zone de couverture de la station de base. Il s'appuie sur un canal de transport descendant partagé à haut débit : le HS-DSCH (« High Speed - Downlink Shared CHannel »). Dans le mode FDD auquel on s'intéresse plus particulièrement dans la présente description, ce canal a notamment pour caractéristiques :
(i) une sous-trame, ou intervalle de temps de transmission, de 2 ms correspondant à 3 tranches temporelles de 666 µs ;
(ii) des processus hybrides de requête de retransmission des données de type HARQ (« Hybrid Automatic Repeat reQuest ») ; et
(iii) un mécanisme d'adaptation de lien.

Au niveau du réseau d'accès, une partie de la couche du protocole de contrôle d'accès au médium (MAC, « Medium Access Control »), le MAC-hs, est localisée dans la station de base. Ainsi, on fait en sorte d'offrir un débit élevé sur ce canal. Pour la même raison, le HS-PDSCH utilise un facteur d'étalement relativement faible, égal à 16. Dans une cellule donnée et pour un code de brouillage donné, il peut être établi jusqu'à 15 canaux HS-PDSCH utilisant des codes de « channelisation » orthogonaux, un seul HS-DSCH pouvant être alloué à un utilisateur.

Le canal de transport HS-DSCH est porté par un ou plusieurs canaux physiques HS-PDSCH. Ces derniers ne supportent pas le mode de soft handover car les mécanismes de transmission rapide supposent une communication avec une seule station de base.

Pour un canal HS-DSCH, il doit être prévu un ou plusieurs canaux physiques de contrôle partagés spécifiques appelés HS-SCCH (« High Speed - Shared Control CHannel »). Les informations de signalisation portées par les HS-SCCH identifient les terminaux destinataires des blocs transmis sur les HS-DSCH, et leur fournissent un certain nombre d'indications utiles à la réception de ces blocs :
- un indicateur de format de transport et de ressources (TFRI, « Transport Format and Resource Indicator »), donnant les informations concernant le format de la partie dynamique du canal HS-DSCH, notamment pour le schéma de modulation employé, la taille du bloc de transport et les ressources physiques allouées (codes de « channelisation ») ;
- les informations liées au protocole HARQ, notamment la version de redondance, un identifiant de processus HARQ, et un indicateur de nouveaux blocs de données.

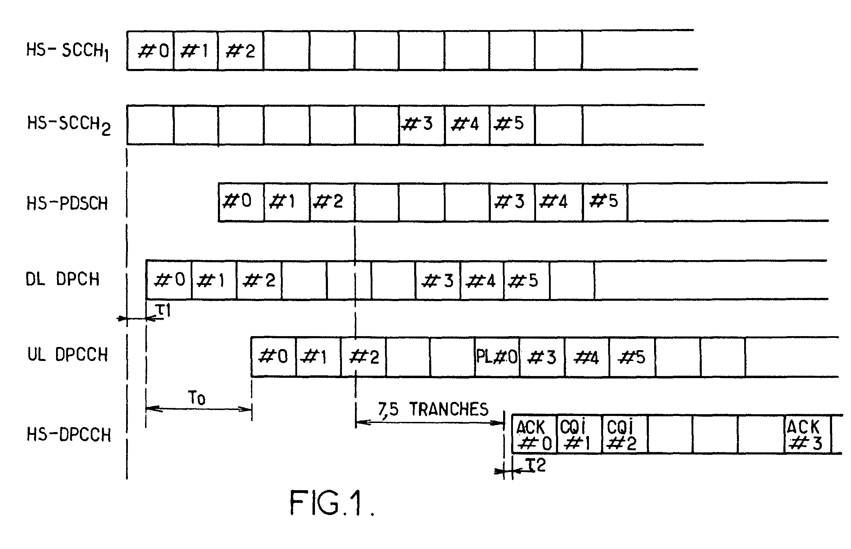

Un canal HS-SCCH utilise un facteur d'étalement de 128, avec une sous-trame identique à celle du HS-DSCH (3 tranches de 666 µs). Tous les HS-PDSCH émis par une station de base sont alignés en temps et la synchronisation des HS-SCCH est avancée de deux tranches (1333 µs) par rapport à celle des HS-PDSCH associés, comme illustré sur la figure 1. Ceci permet au terminal destinataire d'un bloc de données transmis sur un HS-PDSCH dans une sous-trame HSDPA de 2 ms de connaître les informations nécessaires à sa réception. Certaines informations contenues dans le TFRI, à savoir les codes alloués ainsi que la modulation utilisée, sont primordiales pour les terminaux car elles leur permettent de commencer à démoduler le ou les HS-PDSCH qui les concernent. C'est pourquoi ces informations du TFRI sont incluses dans la première tranche de chaque sous-trame sur le HS-SCCH. Ainsi, un décodage rapide du HS-SCCH permet à un terminal de lire le contenu du HS-PDSCH dans la prochaine sous-trame sans perte d'information.

Un canal montant dédié est également défini dans la fonctionnalité HSDPA: le HS-DPCCH (« High Speed-Dedicated Physical Control CHannel »). Il permet au terminal impliqué dans une transmission HSDPA, de retourner des informations de contre-réaction à la station de base portant le canal HS-PDSCH. Ces informations de contre-réaction comprennent notamment les acquittements positifs ou négatifs du protocole HARQ et des mesures utiles à l'adaptation de lien.

En particulier, le terminal renvoie périodiquement à la station de base une requête de mise en forme, basée sur une estimation du rapport signal sur interférence de la liaison descendante, appelée CQI ("Channel Quality Indicator"). Le paramètre CQI est codé sur 31 niveaux, l'écart entre deux niveaux correspondant à un écart d'environ 1 dB dans le rapport signal sur interférence. A chaque valeur de CQI correspond un format de mise en forme des données, comprenant un schéma de modulation, un nombre de codes pouvant être reçus simultanément par le terminal dans un TTI, la taille du bloc d'information. Cette correspondance est typiquement stockée dans une table préétablie mémorisée au niveau de la station de base. Le mécanisme d'adaptation de lien s'appuie sur les valeurs de CQI remontées, pour choisir un format de transmission sur le canal HS-DSCH, de manière à assurer, avec un certain niveau de probabilité, un décodage des données par le terminal (on vise typiquement un taux d'erreur de 10% dans le décodage de la première transmission).

De façon plus détaillée, le HS-DPCCH utilise une structure de sous-trame dont la durée est équivalente à celle d'une sous-trame, c'est-à-dire 2 ms, avec un facteur d'étalement égal à 256. Chaque sous-trame HS-DPCCH est composée d'un premier champ de 2560 chips (10 symboles) contenant les acquittements du protocole HARQ (champ noté "ACK" sur la figure 1). Les derniers 5120 chips (20 symboles) ne sont pas systématiquement émis à chaque sous-trame. Lorsqu'ils le sont, ils contiennent le champ CQI donnant des indications sur la qualité du lien HSDPA descendant. Le HS-DPCCH n'est pas transmis en continu. C'est le cas notamment dans des périodes où aucune information n'est transmise au terminal sur le canal partagé HS-PDSCH.

La figure 1 donne une représentation temporelle des principaux canaux utilisés entre une station de base et un terminal impliqués dans une communication HSDPA. Après désétalement et décodage du signal reçu sur quatre canaux HS-SCCH indiqués au terminal (dont deux seulement sont représentés sur la figure 1), ce dernier identifie le canal HS-PDSCH sur lequel la station de base lui envoie éventuellement des données à haut débit avec un décalage de deux tranches temporelles. Cette transmission est indiquée sur la figure dans les tranches temporelles #0, #1 et #2.

Par ailleurs, des canaux dédiés sont également utilisés : le canal descendant DL_DPCH décalé par rapport aux HS-SCCH d'un temps τ₁ et le canal montant UL_DPCH ayant un décalage temporel T₀, correspondant à environ 1024 chips, par rapport au DL_DPCH, auquel s'ajoute deux fois le temps de propagation entre la station de base et le terminal (non représenté sur la figure 1). Enfin, pour le canal montant HS-DPCCH, la première sous-trame ou tranche temporelle #0 de 2ms est décalée par rapport à la fin de la tranche temporelle #2 du HS-PDSCH. Ce décalage correspond à 7,5 tranches temporelles (c'est-à-dire 5 ms), auquel s'ajoute un ajustement en temps τ₂ de manière à conserver l'orthogonalité entre les codes du HS-DPCCH et du UL_DPCCH, cet ajustement consistant à rendre le décalage entre ces deux canaux multiple de la durée de 256 chips.

Dans l'exemple illustré par la figure 1, une seconde transmission HSDPA est indiquée au terminal par un autre canal HS-SCCH. Elle est notée avec les index de tranches temporelles #3, #4 et #5. La transmission a alors lieu sur un canal HS-PDSCH, qui peut être le même que pour la première transmission, comme c'est le cas sur la figure 1, ou bien sur un ou plusieurs autres HS-PDSCH de la station de base considérée.

On peut noter que, dans l'exemple illustré sur la figure 1, la seconde transmission HSDPA fait l'objet d'un acquittement sur une sous-trame du HS-DPCCH, mais que le CQI n'est pas transmis pour cette seconde transmission. En outre, la période de silence sur les canaux HSDPA descendants entre les deux transmissions représentées, implique une absence de transmission d'un nouvel acquittement par le terminal concerné sur son canal dédié HS-DPCCH, même si le terminal peut profiter de ce silence pour répéter des indications d'acquittement.

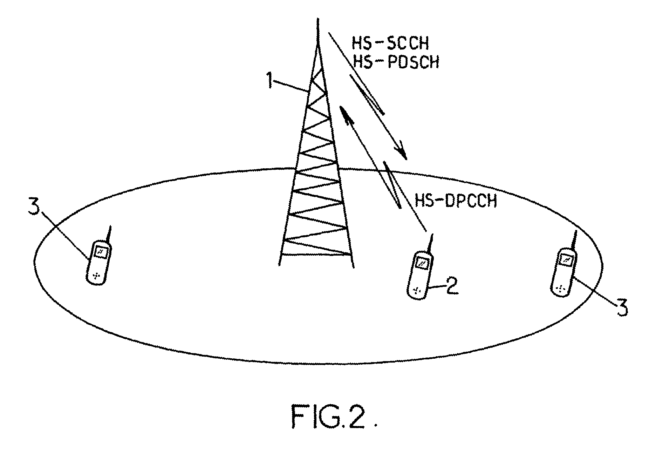

La figure 2 montre une station de base 1 apte à transmettre des données à haut débit à des terminaux radio ou UE ("User Equipment") 2 et 3, selon la fonctionnalité HSDPA. Une allocation des ressources HSDPA est réalisée par la station de base 1. A l'instant considéré sur la figure 2, la station de base 1 indique à l'UE 2, sur un canal HS-SCCH, qu'il va recevoir des données sur un ou plusieurs canaux HS-PDSCH. L'UE 2, quant à lui, possède un canal HS-DPCCH montant comme décrit plus haut. Selon le mode d'allocation mis en oeuvre par la station de base 1, un ou plusieurs UE 3 pourront recevoir des données sur un ou plusieurs canaux HS-PDSCH depuis la station de base 1, lors d'un intervalle de temps de transmission ultérieur, ou bien l'UE 2 continuera éventuellement à recevoir des données HSDPA lors de l'intervalle de temps de transmission suivant, de même qu'un ou plusieurs autres UE 3 éventuellement.

Outre l'allocation des ressources partagées, la station de base 1 doit contrôler la puissance d'émission sur les canaux mis en oeuvre dans le cadre de la fonctionnalité HSDPA, en particulier les canaux HS-SCCH et HS-PDSCH. A cet effet, elle dispose d'une puissance maximale prédéterminée à utiliser pour émettre ces canaux. Cette puissance maximale peut être fixe. Elle peut aussi représenter la puissance restante au niveau de la station de base une fois qu'une puissance d'émission a été affectée aux canaux de communication déjà alloués. Ces canaux comprennent par exemple les canaux dédiés ou communs, utilisés par la station de base. Lorsque de la puissance a déjà été affectée aux canaux HSDPA pour certains terminaux, celle-ci est également avantageusement prise en compte pour affecter de la puissance aux canaux HSDPA relativement à un autre terminal pour le même intervalle de temps de transmission.

Selon les notations de la figure 2, une transmission à l'attention de l'UE 2 sera faite à partir de la station de base 1 sur un canal HS-SCCH et un canal HS-PDSCH, si la puissance restante au niveau de la station de base est suffisante pour la mettre en oeuvre. Dans le cas contraire, la transmission vers l'UE 2 ne pourra avoir lieu. En outre, une puissance d'émission adéquate doit être choisie pour chacun de ces canaux.

On propose donc ci-après de calculer la puissance d'émission pour un canal HS-SCCH, puis pour le ou les canaux HS-PDSCH, étant entendu que la somme des puissances calculées ne doit pas surpasser la puissance restante au niveau de la station de base, sous peine de ne pas servir l'UE considéré. Il est également possible de calculer la puissance d'émission sur les HS-PDSCH, avant d'en déduire une puissance pour le HS-SCCH associé.

On note par ailleurs que, du fait du décalage temporel de deux tranches entre un HS-SCCH et les HS-PDSCH associés, la somme des puissances calculées doit être inférieure à la puissance restante au niveau de la station de base dans les deux sous-trames correspondant aux intervalles de temps de transmission respectifs pour chacun des canaux. En référence à la figure 1, cela signifie que la puissance d'émission cumulée sur les canaux HS-SCCH et HS-PDSCH pour l'utilisateur considéré doit être inférieure à la puissance restante au niveau de la station de base dans l'intervalle de temps couvert par les tranches #0, #1 et #2 du canal HS-SCCH₁ par exemple (on note P_{HSDPA_contrôle} cette puissance), mais également dans l'intervalle de temps couvert par les tranches #0, #1 et #2 du canal HS-PDSCH (on note P_{HSDPA} cette puissance), c'est-à-dire sur cinq tranches temporelles consécutives au total. En pratique, si l'on commence par calculer une puissance d'émission relative à un canal HS-SCCH, ce calcul tient compte avantageusement de la puissance d'émission préalablement calculée sur l'intervalle de temps de transmission précédent des canaux HS-PDSCH.

Dans la suite, on fait le choix, non limitatif, de calculer une puissance pour le canal HS-SCCH en premier, puis pour le ou les canaux HS-PDSCH associés.

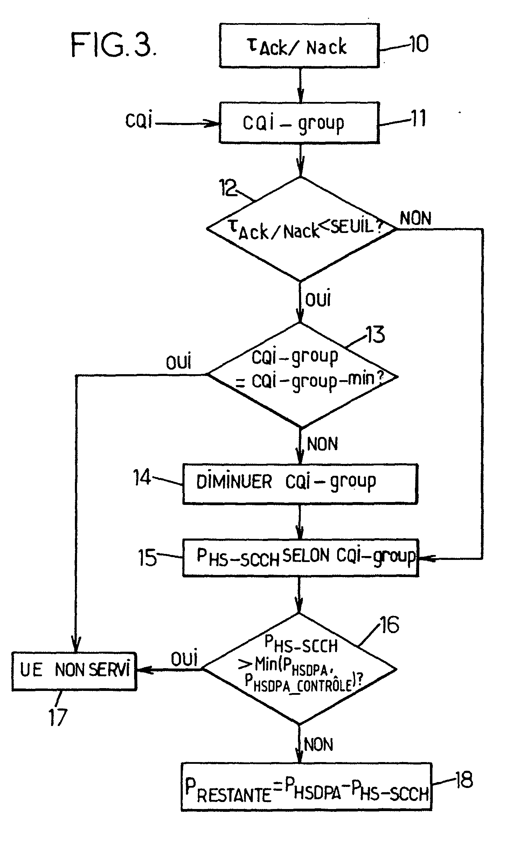

La figure 3 illustre un mode de calcul de la puissance pour le canal HS-SCCH relativement à un UE selon l'invention. Ce calcul est par exemple effectué par la station de base 1 relativement à l'UE 2 de la figure 2. La puissance d'émission P_{HS-SCCH} à calculer pour le HS-SCCH pour un prochain intervalle de temps de transmission à destination de l'UE 2 prend en compte un calcul de CQI. En effet, plus le CQI remonté à la station de base 1 par l'UE 2 est faible, plus le canal de propagation correspondant est mauvais, et donc plus la puissance à fournir sera importante de manière à pallier la mauvaise qualité du canal. Les valeurs de CQI sont par ailleurs avantageusement classées par groupes de CQI ("CQI_group"). La correspondance entre un ensemble de valeurs de CQI et un CQI_group est stockée au niveau de la station de base 1.

Une possibilité serait de déduire du CQI_group obtenu relativement à l'UE 2, c'est-à-dire du CQI indirectement, une marge de puissance à ajouter à la puissance sur un canal pilote appelé CPICH ("Common Pilot Channel"). Ce canal porte un signal pilote, ou signal de balise, formé à partir d'une séquence de symboles prédéterminée (voir spécification technique 3G TS 25.211, "Physical channels and mapping of transport channels onto physical channels (FDD)", version 3.3.0 publiée en juin 2000 par le 3GPP). Ce signal est émis par la station de base 1 sur le code de brouillage primaire de la cellule, avec un code de canal déterminé.

Toutefois, ce mode de calcul n'est pas entièrement satisfaisant puisque le calcul du CQI n'est pas effectué de manière uniforme par les terminaux radio, si bien qu'une détermination de puissance sur la seule base du CQI pourrait entraîner des disparités de fonctionnement.

Selon le mode de réalisation illustré sur la figure 3, on calcule une grandeur statistique relative au mécanisme d'acquittement décrit plus haut (étape 10). Cette grandeur peut par exemple être un taux moyen τ_{Ack/Nack} d'acquittements, positifs ou négatifs, préalablement reçus à la station de base 1 sur un canal HS-DPCCH de la part de l'UE 2. Ce taux permet d'estimer la proportion d'acquittements reçus à la station de base 1 par rapport aux acquittements attendus par la station de base 1, suite à une transmission préalable, mais que celle-ci n'a pas reçus. En effet, l'absence d'acquittement, qu'il soit positif (Ack) ou négatif (Nack), peut être considérée comme une indication que l'UE 2 n'a pas réussi à détecter une information qui lui était destinée sur le canal HS-SCCH, la puissance de ce dernier étant trop faible, et donc que l'UE 2 n'a pas réussi à écouter le canal HS-DSCH associé en temps voulu.

Le taux moyen τ_{Ack/Nack} est calculé sur une période d'observation suffisamment représentative, par exemple grâce à un mécanisme de fenêtre glissante d'observation. On note que dans une variante équivalente de ce mode de réalisation, le taux moyen estimé est un taux τ_{DTX} correspondant à la proportion d'acquittements non reçus à la station de base 1, alors qu'ils étaient attendus par cette dernière (soit τ_{DTX} = 1-τ_{Ack/Nack}).

A l'étape 11, on déduit, comme indiqué plus haut, un CQI_group en fonction des valeurs de CQI remontées par l'UE 2, éventuellement sur la même période d'observation que pour τ_{Ack/Nack}. On note que cette étape 11 pourrait également être mise en oeuvre avant l'étape 10.

On compare, à l'étape 12, la valeur de τ_{Ack/Nack} avec un seuil prédéterminé. Si τ_{Ack/Nack} est supérieur audit seuil, cela signifie que le taux moyen d'acquittements reçus à la station de base 1 est satisfaisant et donc que le canal HS-SCCH est bien reçu par l'UE 2. La puissance du HS-SCCH est donc calculée à partir de l'information du CQI_group obtenue (voir la description de l'étape 15 ci-dessous).

Au contraire, si τ_{Ack/Nack} est inférieur audit seuil, cela signifie que le taux moyen d'acquittements reçus à la station de base 1 est trop faible et donc que de nombreuses informations portées par le HS-SCCH à destination de l'UE 2 ne sont pas détectées par ce dernier. Dans ce cas, il convient donc d'augmenter la puissance d'émission du HS-SCCH pour améliorer la détection de ce canal par l'UE 2.

A cet effet, on diminue le CQI_group précédemment obtenu, c'est-à-dire qu'on considère artificiellement que les valeurs de CQI remontées par l'UE 2 sont moins bonnes que dans la réalité (étape 14). Bien sûr, la diminution du CQI_group, c'est-à-dire le choix d'un CQI_group relatif à des valeurs plus faibles de CQI, n'est possible que si le CQI_group obtenu à l'étape 11 n'est pas déjà le groupe CQI_group_min correspondant aux valeurs de CQI les plus faibles. Cette vérification est avantageusement faite à l'étape 13.

Si le groupe obtenu à l'étape 11 est le CQI_group_min, il n'est alors pas possible d'augmenter la puissance d'émission du HS-SCCH pour obtenir des valeurs acceptables du τ_{Ack/Nack}, si bien que l'UE 2 n'est pas servi lors du prochain intervalle de temps de transmission du canal HS-SCCH (étape 17). La station de base 1 privilégie alors plutôt un UE 3, autre que l'UE 2, pour le prochain intervalle de temps de transmission du HS-SCCH considéré.

On notera qu'il est possible de calculer une puissance P_{HS-DSCH} pour le canal HS-DSCH associé au HS-SCCH avant de calculer P_{HS-SCCH}, par exemple selon les principes décrits ci-après. Dans ce cas, lorsqu'on constate par la suite que la puissance d'émission du canal HS-SCCH ne peut pas être augmentée, on peut alors décider de revoir la puissance P_{HS-DSCH} à la baisse, de manière à être capable d'affecter la puissance requise au canal HS-SCCH.

A l'étape 15, on calcule P_{HS-SCCH} en fonction du CQI_group obtenu à l'étape 14 (ou à l'étape 11, si τ_{Ack/Nack} est supérieur au seuil). En effet, une marge de puissance par rapport à la puissance d'émission sur le canal pilote CPICH correspond à chaque CQI_group, c'est-à-dire à chaque groupe prédéfini de valeurs de CQI, comme indiqué plus haut. P_{HS-SCCH} est donc obtenu par ajout à cette puissance d'émission sur le CPICH d'une marge correspondant au CQI_group obtenu pour l'UE 2.

Grâce à ce mécanisme, on s'assure que le canal HS-SCCH sera bien détecté par l'UE 2, même si ce dernier remonte des valeurs de CQI peu fiables, dans la mesure où le taux τ_{Ack/Nack} est ramené à des valeurs acceptables.

Par la suite, on vérifie, à l'étape 16, que la puissance calculée P_{HS-SCCH} n'est pas supérieure à la puissance maximale P_{HSDPA} à allouer par la station de base 1 et qui correspond à une puissance restante au niveau de la station de base 1 avant affectation de puissance aux canaux HSDPA de l'utilisateur considéré. Si P_{HS-SCCH} pour l'utilisateur considéré est supérieur à P_{HSDPA} et/ou à P_{HSDPA_contrôle}, cela signifie que la puissance restante au niveau de la station de base 1 est insuffisante pour que le canal HS-SCCH puisse être émis à la puissance calculée P_{HS-SCCH}. Par conséquent, l'UE 2 ne peut alors être servi (étape 17) et les ressources HS-SCCH correspondantes peuvent alors être allouées à un UE 3, autre que l'UE 2.

Dans le cas contraire, où P_{HS-SCCH} n'est pas supérieur à P_{HSDPA} et n'est pas non plus supérieur à P_{HSDPA_contrôle}, on déduit alors de la puissance calculée P_{HS-SCCH}, une nouvelle puissance restante dans la station de base 1 (étape 18). Cette puissance restante, qui peut s'écrire Pᵣₑₛₜₐₙₜₑ = P_{HSDPA} - P_{HS- SCCH}, constitue une borne supérieure pour la puissance à allouer au canal HS-DSCH associé au canal HS-SCCH.

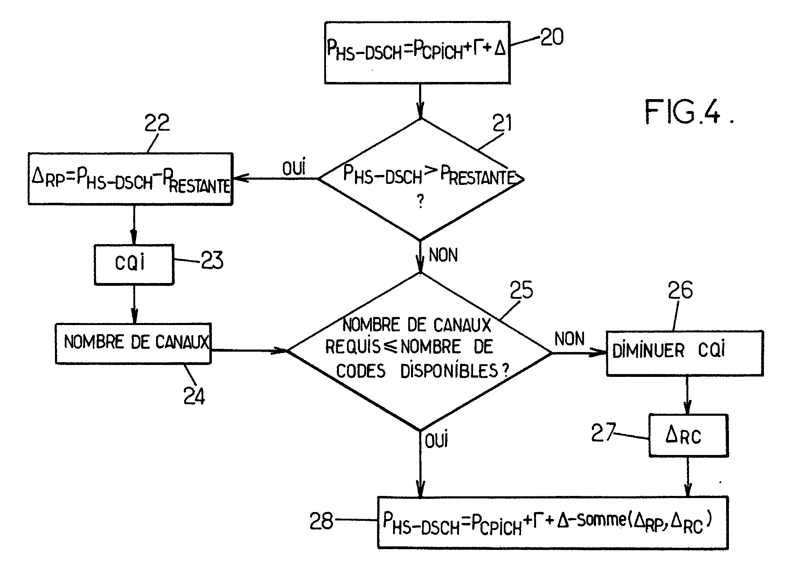

La figure 4 montre un exemple de détermination d'une puissance d'émission P_{HS-DSCH} pour le canal HS-DSCH lorsque la puissance d'émission P_{HS-SCCH} du canal HS-SCCH associé à ce HS-DSCH à été préalablement déterminée, par exemple selon le mécanisme décrit plus haut en référence à la figure 3. On entend par puissance d'émission pour le canal HS-DSCH, la puissance d'émission à partager de façon équitable entre les canaux physiques HS-PDSCH sur lesquels le canal de transport HS-DSCH sera multiplexé, cette puissance d'émission correspondant à une émission sur un prochain intervalle de temps de transmission de ces canaux HS-PDSCH.

On calcule à l'étape 20 une première estimation P_{HS-DSCH} selon la formule P_{HS-DSCH} = P_{CPICH} + Γ + Δ, où P_{CPICH} représente la puissance d'émission sur le canal pilote CPICH, Γ est un paramètre appelé "Measurement Power Offset", communiqué à la station de base 1 par un contrôleur de station de base et correspondant à une marge de puissance par rapport à la puissance sur le CPICH, et Δ est un paramètre appelé "Reference Power Adjustement" dont la valeur dépend du CQI remonté par l'UE 2 ainsi que de la catégorie de cet UE. Ces paramètres ainsi que la formule ci-dessus sont définis à la section 6A.2 de la spécification technique 25.214 précitée. En particulier, la valeur de P_{HS-DSCH} calculée selon la formule précédente est utilisée par l'UE 2 comme valeur de référence pour son calcul de CQI.

On compare, à l'étape 21, cette première estimation du P_{HS-DSCH} calculée à l'étape 20 avec la valeur Pᵣₑₛₜₐₙₜₑ, par exemple obtenue lors de l'étape 18 précédemment décrite. Si P_{HS-DSCH} est supérieur à Pᵣₑₛₜₐₙₜₑ, cela implique que la puissance d'émission sur le HS-DSCH doit être revue à la baisse par rapport à l'estimation initiale qui en a été faite, sans quoi le HS-DSCH ne pourra être transmis à l'attention de l'UE 2.

A cet effet, on détermine une réduction de puissance à appliquer à la première estimation du P_{HS-DSCH} calculée à l'étape 20, de manière à ramener celle-ci à un niveau inférieur ou égal à Pᵣₑₛₜₐₙₜₑ. Cette réduction de puissance Δ_{RP} est calculée comme la différence suivante : Δ_{RP} = P_{HS-DSCH} - Pᵣₑₛₜₐₙₜₑ (étape 22).

La diminution de la puissance d'émission sur le canal HS-DSCH s'accompagne d'une diminution du CQI afin de conserver la qualité de service. En effet, un maintien du CQI malgré une diminution de puissance sur le HS-DSCH nécessiterait de renforcer la fiabilité de la transmission. La spécification technique 25.214 précitée indique qu'une diminution d'un niveau du CQI correspond à une différence d'environ 1 dB sur la puissance du HS-DSCH. Ainsi, on détermine un nouveau CQI à l'étape 23 à partir de la valeur de Δ_{RP} obtenue, ce nouveau CQI étant de Δ_{RP} niveaux inférieur au CQI remonté par l'UE 2. On note que si Δ_{RP} n'a pas une valeur entière lorsqu'il est exprimé en dB, on prend avantageusement la partie entière de Δ_{RP}, éventuellement à 1 dB près, pour calculer la nouvelle valeur du CQI de l'étape 23.

A chaque valeur de CQI correspond en outre un nombre de canaux physiques sur lesquels le HS-DSCH peut être multiplexé. La spécification technique 25.214 précitée prévoit notamment que cette correspondance soit stockée dans une table de correspondance mémorisée au niveau de la station de base. Ainsi, après avoir calculé une nouvelle valeur de CQI pour l'UE 2, la station de base 1 déduit de ce CQI un nombre de canaux physiques HS-PDSCH, par exemple à partir d'une telle table de correspondance (étape 24).

A l'issue des étapes précédentes, notamment de l'étape 22, la puissance d'émission calculée pour le canal HS-DSCH devrait être inférieure ou égale à la puissance Pᵣₑₛₜₐₙₜₑ.

Une fois que P_{HS-DSCH} est inférieur ou égal à Pᵣₑₛₜₐₙₜₑ, on vérifie, dans une étape 25, si le nombre de canaux physiques HS-PDSCH requis pour la transmission de données à destination de l'UE 2 est inférieur ou éventuellement égal au nombre de ressources HSDPA disponibles au niveau de la station de base 1, c'est-à-dire au nombre de codes de "channelisation" disponibles pour des canaux HS-PDSCH. Si cette condition est vérifiée, la station de base 1 sera en mesure de servir l'UE 2 selon le nombre de ressources maximum souhaité et il n'est alors pas nécessaire de modifier la puissance calculée précédemment pour le canal HS-DSCH, soit : P_{HS-DSCH} = P_{CPICH} + Γ + Δ - Δ_{RP}.

Bien sûr, il faut alors que le nombre de codes disponibles au niveau de la station de base 1 ne soit pas nul, car dans le cas contraire, l'absence de ressources disponibles empêchera l'UE 2 d'être servi lors du prochain intervalle de temps de transmission du HS-DSCH.

Si au contraire, le nombre de canaux HS-PDSCH requis est supérieur au nombre de codes de channelisation restants pour des canaux HS-PDSCH, il n'est pas possible de servir l'UE 2 selon le nombre de ressources maximum souhaité. On réduit alors la valeur de CQI pour la mettre en adéquation avec le nombre de codes disponibles au niveau de la station de base 2, selon la correspondance préétablie dans la table de correspondance mentionnée plus haut (étape 26).

Comme dans le cas décrit plus haut, cette diminution de CQI implique une réduction de puissance pour le canal HS-DSCH notée Δ_{RC} (étape 27), pour maintenir la qualité de service. La valeur de Δ_{RC}, en dB, correspond au nombre de niveaux dont le CQI est diminué.

La puissance d'émission finalement obtenue, à l'étape 28, pour le canal HS-DSCH peut alors s'écrire : P_{HS-DSCH} = P_{CPICH} + Γ + Δ - Somme(Δ_{RP},Δ_{RC}). Cette puissance sera alors à répartir de façon équitable entre les différents canaux physiques requis.

Le nombre de canaux physiques HS-PDSCH sur lesquels le HS-DSCH sera multiplexé lors du prochain intervalle de temps de transmission considéré, et entre lesquels la puissance P_{HS-DSCH} obtenue à l'étape 28 sera partagée peut en outre faire l'objet d'un ajustement supplémentaire. On détermine en effet la puissance émise par canal HS-PDSCH en tenant compte à nouveau d'informations relatives aux acquittements retournés à la station de base 1 par l'UE 2 selon le mécanisme décrit plus haut.

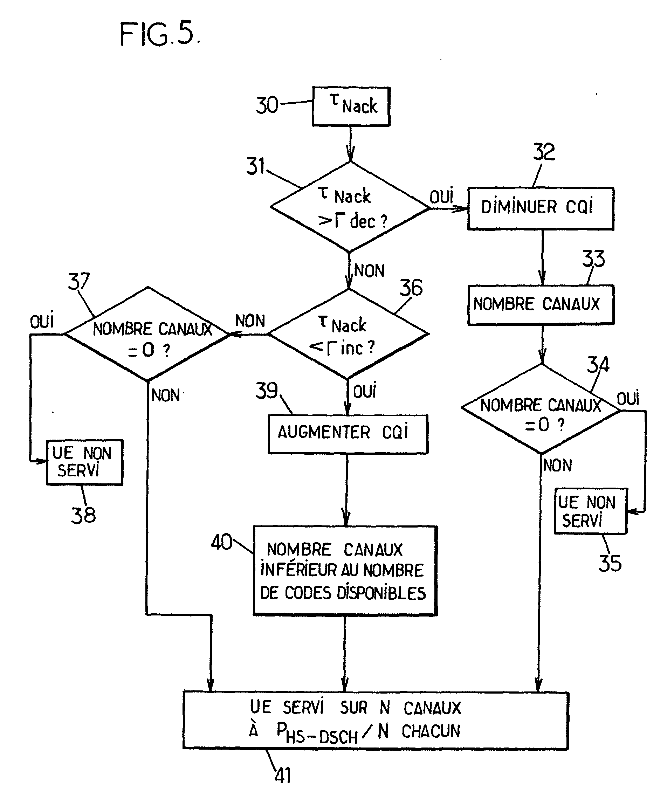

La figure 5 illustre un mode de réalisation visant à déterminer le nombre de canaux physiques HS-PDSCH à utiliser lors du prochain intervalle de temps de transmission, ainsi que la puissance d'émission par canal physique HS-PDSCH.

Selon ce mode de réalisation, on détermine, à l'étape 30, une grandeur statistique relative au mécanisme d'acquittement décrit plus haut. Dans l'exemple illustré sur la figure 5, cette grandeur est un taux moyen τ_{Nack} d'acquittements négatifs (Nack) reçus à la station de base 1 depuis l'UE 2, sur une période d'observation suffisamment représentative, par exemple selon un mécanisme de fenêtre glissante d'observation. La spécification technique 25.214 précitée précise qu'un tel taux doit être de l'ordre de 10%.

A l'étape 31, on vérifie si τ_{Nack} est supérieur à un premier seuil Γ_{dec}. Dans l'affirmative, cela signifie que la proportion d'informations préalablement transmises sur le HS-DSCH, acquittées négativement par l'UE 2 est élevée, et donc que la puissance par bit utile est probablement trop faible. La puissance totale allouée P_{HS-DSCH} ayant été fixée, par exemple selon le mécanisme illustré à la figure 4 décrit plus haut, il convient donc de diminuer le nombre de bits utiles à transmettre, ce qui correspond à un changement du format de transport. Chaque format de transport définissant un nombre de bits utiles par bloc de transport correspond à une valeur de CQI, cette correspondance étant avantageusement stockée dans une table de correspondance mémorisée au niveau de la station de base, comme le prévoit la spécification technique 25.214 précitée.

Ainsi, lorsque τ_{Nack} est supérieur à Γ_{dec}, on diminue la valeur du CQI obtenue précédemment pour réduire la taille des blocs de transport sur le HS-DSCH (étape 32). Cette diminution peut consister en une réduction pas par pas du CQI, ou bien par nombre entier de pas supérieur à 2. Dans ce dernier cas, le nombre entier peut dépendre de l'écart entre les valeurs de τ_{Nack} et de Γ_{dec}. Lorsque la diminution de CQI effectuée à l'étape 32 ne suffit pas pour revenir à des valeurs acceptables de τ_{Nack}, l'étape 32 peut être exécutée plusieurs fois de suite jusqu'à obtenir une valeur de CQI satisfaisante. Il faut bien sûr que la dernière valeur de CQI obtenue reste dans la plage de valeurs de CQI définie par la spécification technique 25.214 précitée, c'est-à-dire qu'elle reste supérieure ou égale à la plus petite valeur de CQI prévue (CQI=0), sans quoi l'UE 2 ne pourra être servi.

On déduit de la nouvelle valeur de CQI obtenue à l'étape 32, un nombre de canaux physiques HS-PDSCH correspondant, par exemple à l'aide d'une table de correspondance telle qu'évoquée plus haut et prévue par la spécification technique 25.214 précitée (étape 33).

On vérifie ensuite, à l'étape 34, que ce nombre N de canaux obtenu est non nul, car dans le cas contraire, cela revient à dire qu'aucune ressource ne sera allouée à l'UE 2 pour le prochain intervalle de temps de transmission, et donc que l'UE 2 ne pourra être servi lors de cet intervalle de temps de transmission.

Si, contrairement au cas envisagé plus haut, l'étape 31 révèle que τ_{Nack} est inférieur à Γ_{dec}, on compare τ_{Nack} à un second seuil Γ_{inc}, avantageusement inférieur à Γ_{dec} (étape 36). Si τ_{Nack} est supérieur à Γ_{inc}, mais inférieur à Γ_{dec}, sa valeur est considérée comme satisfaisante et on peut alors procéder à l'allocation de ressources à l'UE 2, le nombre de ressources allouées étant déterminées par la valeur de CQI précédemment obtenue, par exemple lors de la détermination de la puissance totale P_{HS-DSCH}. Bien sûr, il convient avantageusement de vérifier dans une étape 37 que le nombre N de canaux HS-PDSCH en question est non nul, car sinon l'UE 2 ne sera pas servi lors du prochain intervalle de temps de transmission (étape 38).

Si l'étape 36 révèle que τ_{Nack} est inférieur à Γ_{inc}, cela signifie que la proportion d'informations transmises sur le HS-DSCH à destination de l'UE 2 faisant l'objet d'acquittements négatifs est trop faible, et donc que la puissance par bit utile sur le HS-DSCH est trop élevée. Il convient donc d'augmenter la taille du bloc de transport, c'est-à-dire le nombre de bits utiles dans le HS-DSCH, sans limiter la puissance d'émission sur le HS-DSCH.

A cet effet, on augmente la valeur du CQI précédemment obtenue, dans une étape 39. A cette nouvelle de CQI correspond un nombre N de canaux HS-PDSCH requis. Ce dernier doit être inférieur au nombre de ressources disponibles au niveau de la station de base 1 pour que l'UE 2 puisse être correctement servi.

Une fois le nombre N de canaux HS-PDSCH déterminé selon le mécanisme décrit ci-dessus, on est alors en mesure de calculer la puissance d'émission pour chaque canal physique HS-PDSCH sur le prochain intervalle de temps de transmission (étape 41). Cette puissance d'émission est avantageusement égale pour chaque canal HS-PDSCH et elle peut s'écrire : P_{HS-PDSCH} = P_{HS-DSCH} / N.

De façon avantageuse, une transmission est alors effectuée sur le ou les canaux HS-SCCH et sur le ou les canaux HS-PDSCH avec les puissances d'émission respectives calculées selon les mécanismes décrits plus haut, lors des intervalles de temps de transmission correspondants pour chacun de ces canaux.

Les mêmes étapes de procédé sont ensuite avantageusement à nouveau mises en oeuvre de façon à déterminer la puissance d'émission sur les différents canaux descendants partagés HSDPA pour des intervalles de temps de transmission correspondants ultérieurs, en vue d'une transmission à destination d'un ou, si les ressources le permettent, plusieurs UE parmi l'UE 2 et les UE 3, pour lequel ou lesquels il est prévu d'allouer des ressources HSDPA lors desdits intervalles de temps de transmission.

De façon avantageuse, les différentes étapes décrites plus haut sont mises en oeuvre au sein de la station de base 1. Il est cependant également possible de prévoir qu'un certain nombre d'entre elles soient exécutées dans une autre entité, par exemple au niveau d'un contrôleur de station de base, auquel la station de base 1 est reliée.

Dans un mode de réalisation de l'invention, les différentes étapes du procédé sont en outre mises en oeuvre lors d'une exécution d'instructions correspondantes d'un programme d'ordinateur. Ce dernier peut par exemple être exécuté par des moyens logiciels de la station de base 1 considérée dans l'exemple décrit plus haut.

## Revendications

1. Procédé de contrôle de puissance d'émission sur des canaux de communication dans un système de radiocommunication comprenant au moins une station de base (1) agencée pour transmettre, dans des intervalles de temps de transmission successifs, des blocs à destination de terminaux radio (2, 3), sur des canaux de communication partagés entre les terminaux radio, les canaux de communication partagés comprenant des canaux de trafic et des canaux de contrôle associés à des canaux de trafic, certains au moins des blocs transmis par la station de base donnant lieu à des acquittements positifs ou négatifs de la part des terminaux radio,
le procédé comprenant les étapes suivantes relativement à un terminal radio (2) susceptible de recevoir des blocs sur au moins un canal de trafic et un canal de contrôle associé audit canal de trafic, lors d'un prochain intervalle de temps de transmission correspondant pour chaque canal :
- déterminer au moins une indication de qualité relative audit canal de trafic ;
- déterminer au moins une quantité relative à des acquittements préalablement transmis à la station de base ; et
- calculer une puissance d'émission sur l'un au moins parmi le canal de trafic et le canal de contrôle associé audit canal de trafic, pour ledit prochain intervalle de temps de transmission correspondant, à partir de ladite indication de qualité relative au canal de trafic et de ladite quantité relative à des acquittements préalablement transmis à la station de base.

2. Procédé selon la revendication 1, dans lequel le canal de trafic est adapté à une transmission de données à haut débit.

3. Procédé selon la revendication 1 ou 2, dans lequel on calcule une puissance d'émission sur le canal de trafic et une puissance d'émission sur le canal de contrôle associé audit canal de trafic, et dans lequel on émet en outre à destination dudit terminal radio sur le canal de trafic et sur le canal de contrôle associé audit canal de trafic, à la puissance d'émission calculée correspondante, lors dudit prochain intervalle de temps de transmission correspondant pour chaque canal, ladite émission étant mise en oeuvre de façon sélective lorsque la somme de la puissance d'émission sur le canal de trafic et de la puissance d'émission sur le canal de contrôle associé audit canal de trafic est inférieure à une puissance d'émission prédéterminée sur le prochain intervalle de temps de transmission correspondant pour chaque canal.

4. Procédé selon la revendication 3, dans lequel l'émission à destination dudit terminal radio sur le canal de contrôle associé audit canal de trafic, à la puissance d'émission calculée correspondante, lors dudit prochain intervalle de temps de transmission correspondant, est mise en oeuvre de façon sélective en outre lorsque la somme de la puissance d'émission sur le canal de trafic et de la puissance d'émission sur le canal de contrôle associé audit canal de trafic est inférieure à une puissance d'émission prédéterminée sur l'intervalle de temps de transmission précédant immédiatement ledit prochain intervalle de temps de transmission correspondant.

5. Procédé selon la revendication 4, dans lequel ladite puissance d'émission prédéterminée est une puissance restante au niveau de la station de base, après affectation de puissance à des canaux déjà alloués.

6. Procédé selon l'une quelconque des revendications précédentes, dans lequel la détermination d'au moins une quantité relative à des acquittements préalablement transmis à la station de base comprend la détermination d'un taux de blocs ayant fait l'objet d'un acquittement de la part dudit terminal mobile sur une période d'observation.

7. Procédé selon la revendication 6, dans lequel la détermination de l'indication de qualité relative audit canal de trafic prend en compte ledit taux de blocs ayant fait l'objet d'un acquittement de la part dudit terminal mobile sur une période d'observation.

8. Procédé selon la revendication 7, dans lequel la puissance d'émission sur le canal de contrôle associé audit canal de trafic pour le prochain intervalle de temps de transmission correspondant est calculée par ajout, à la puissance d'émission prédéterminée sur un canal de communication pilote, d'une marge déduite de ladite indication de qualité déterminée.

9. Procédé selon l'une quelconque des revendications 3 à 8, dans lequel on calcule la puissance d'émission sur le canal de contrôle associé audit canal de trafic, pour ledit prochain intervalle de temps de transmission correspondant, puis on calcule la puissance d'émission sur ledit canal de trafic, pour ledit prochain intervalle de temps de transmission correspondant, la puissance d'émission sur ledit canal de trafic étant calculée pour être inférieure ou égale à la différence entre la puissance d'émission prédéterminée et la puissance d'émission calculée sur le canal de contrôle associé audit canal de trafic.

10. Procédé selon la revendication 9, dans lequel la détermination de l'indication de qualité relative audit canal de trafic et le calcul de la puissance d'émission sur ledit canal de trafic tiennent en outre compte d'une différence entre une puissance de référence et ladite différence entre la puissance d'émission prédéterminée et la puissance d'émission calculée sur le canal de contrôle associé audit canal de trafic.

11. Procédé selon la revendication 9 ou 10, dans lequel on déduit de l'indication de qualité déterminée relative au canal de trafic un nombre de canaux physiques sur lesquels le canal de trafic peut être multiplexé, selon une table de correspondance préétablie, et dans lequel la détermination de l'indication de qualité relative audit canal de trafic et le calcul de la puissance d'émission sur ledit canal de trafic pour ledit prochain intervalle de temps de transmission correspondant tiennent en outre compte d'une comparaison entre ledit nombre de canaux physiques sur lesquels le canal de trafic peut être multiplexé et un nombre de ressources physiques disponibles à la station de base pour ledit prochain intervalle de temps de transmission.

12. Procédé selon l'une quelconque des revendications 9 à 11, dans lequel la détermination d'au moins une quantité relative à des acquittements comprend la détermination d'un taux d'acquittements négatifs préalablement transmis à la station de base par ledit terminal radio sur une période d'observation, et dans lequel la détermination de l'indication de qualité relative audit canal de trafic prend en compte ledit taux d'acquittements négatifs préalablement transmis à la station de base par ledit terminal radio.

13. Procédé selon la revendication 12, dans lequel on déduit de l'indication de qualité déterminée relative au canal de trafic un nombre de canaux physiques sur lesquels le canal de trafic est à multiplexer, selon une table de correspondance préétablie, et dans lequel on partage sensiblement équitablement la puissance d'émission calculée entre lesdits canaux physiques pour ledit prochain intervalle de temps de transmission correspondant au canal de trafic.

14. Procédé selon l'une quelconque des revendications précédentes, dans lequel la détermination de l'indication de qualité relative audit canal de trafic prend en compte des informations de qualité relative audit canal de trafic transmises à la station de base par ledit terminal radio.

15. Station de base (1) agencée pour transmettre, dans des intervalles de temps de transmission successifs, des blocs à destination de terminaux radio (2, 3), sur des canaux de communication partagés entre les terminaux radio, les canaux de communication partagés comprenant des canaux de trafic et des canaux de contrôle associés à des canaux de trafic, certains au moins des blocs transmis par la station de base donnant lieu à des acquittements positifs ou négatifs de la part des terminaux radio, ladite station de base étant agencée pour mettre en oeuvre un contrôle de puissance d'émission sur certains au moins desdits canaux de communication partagés selon l'une quelconque des revendications précédentes.

16. Produit programme d'ordinateur à installer dans une station de base (1), comprenant des instructions pour mettre en oeuvre le procédé selon l'une quelconque des revendications 1 à 14, lors d'une exécution du programme par des moyens de la station de base.
